# FASCICULE DE BREVET EUROPEEN

(11) **EP 2 011 698 B1**
(45) Date de publication et mention de la délivrance du brevet: **19.10.2011**
(21) Numéro de dépôt: 08157636.5
(22) Date de dépôt: 05.06.2008
(51) Int. Cl.: B60R 19/56

(54) **Dispositif anti-encastrement rétractable**
Einziehbarer Unterfahrschutz
Retractable anti-underrun device

(30) Priorité: 29.06.2007 FR 0756147
(43) Date de publication de la demande: 07.01.2009
(73) Titulaire: Guima Palfinger, 82300 Caussade (FR)
(72) Inventeur: Gabens, Léo, 82300, CAUSSADE (FR)
(74) Mandataire: Tetaz, Franck Claude Edouard

(56) Documents cités:
- EP-A- 1 741 602
- DE-U1- 9 307 389
- DE-U1- 9 316 686

## Description

### DOMAINE DE L'INVENTION

L'invention se rapporte à un dispositif anti-encastrement rétractable destiné à être monté à l'arrière d'un véhicule tel qu'un camion.

### ARRIERE PLAN DE L'INVENTION

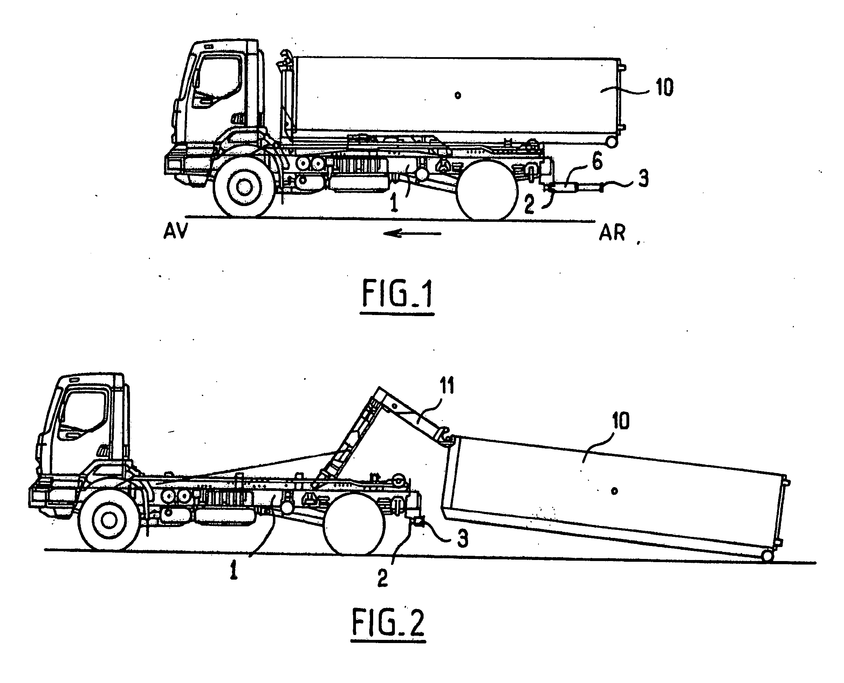

Les châssis porteurs routiers, équipés d'un bras de levage pour caisson amovible ou d'une benne basculante, sont généralement munis d'un dispositif anti-encastrement, fixé à l'arrière du châssis et ayant pour fonction de le protéger contre l'encastrement par l'arrière d'un véhicule. Un tel dispositif est représenté par exemple à la figure 1. Il comprend à cet effet un pare-chocs 3, lié par deux paires de bras 6 et 7 à une traverse 2 solidaire du châssis 1. Lorsque le véhicule circule sur route, le pare-chocs est disposé de manière à se trouver sensiblement au droit de l'arrière du caisson 10. Dans la suite du texte, on évoquera l' « avant » (AV) et l' « arrière » (AR) du dispositif en référence au sens de roulage du véhicule.

Pour les besoins du fonctionnement du bras de levage 11 (chargement, dépose ou basculement du caisson 10) ou de la benne basculante (basculement), il est nécessaire de rétracter le dispositif anti-encastrement de manière à ramener le pare-chocs 3 contre la traverse 2, comme cela est représenté sur la figure 2.

Ce dispositif est commandé depuis la cabine du véhicule, généralement au moyen d'un vérin qui actionne le repliement des bras 6 et 7.

Pour des raisons de sécurité, lors des opérations de repliement ou de déploiement du dispositif, le pare-chocs ne doit pas se déporter au-delà du gabarit latéral du véhicule.

Il est donc nécessaire de prévoir un dispositif anti-encastrement rétractable garantissant que le pare-chocs reste toujours à l'intérieur du gabarit latéral du véhicule.

A cet effet, des dispositifs comprenant des moyens de synchronisation des bras existent déjà.

Parmi ces dispositifs, celui décrit dans le modèle d'utilité DE 93 07 389 U1 comprend quatre bras articulés, l'un des bras avant étant actionné par un vérin. Les moyens de synchronisation sont constitués d'une tige de guidage permettant de coupler les deux bras avant, et de deux ressorts de traction de raideur identique, reliant les bras arrière au pare-chocs de manière à s'opposer au repliement.

Toutefois, ce dispositif présente plusieurs inconvénients. En premier lieu, il nécessite un grand nombre de composants. Par ailleurs, les ressorts de traction s'étendant entre les bras arrière d'une part, et le pare-chocs d'autre part, il existe un risque non négligeable de coincement d'un objet dans les spires de l'un de ses ressorts, ce qui aurait pour conséquence de le bloquer et d'empêcher les bras de se déplier ou de se replier de manière synchrone. La trajectoire du pare-chocs pourrait donc être amenée à sortir du gabarit latéral du véhicule.

Le document DE 93 16 686 U1 décrit un dispositif anti-encastrement rétractable qui correspond au préambule de la revendication 1.

Un premier but de l'invention est donc de proposer un dispositif anti-encastrement de conception robuste et de fabrication simple. Un autre but de l'invention est de procurer des moyens de synchronisation peu vulnérables au blocage par un élément extérieur.

### BREVE DESCRIPTION DE L'INVENTION

Ces buts sont atteints par la présente invention, qui concerne un dispositif anti-encastrement rétractable selon la revendication 1.

De manière particulièrement avantageuse, les ressorts sont à l'état libre ou légèrement précontraint lorsque le dispositif anti-encastrement est déployé et à l'état contraint lorsque le dispositif est replié.

Selon d'autres caractéristiques particulièrement avantageuses du dispositif selon l'invention, prises seules ou en combinaison :
- les ressorts ont un diamètre de fil compris entre 6 et 7 mm, un nombre de spires jointives compris entre 6 et 10, et un diamètre extérieur compris entre 50 et 70 mm;
- l'actionneur est un vérin hydraulique double effet à simple tige;
- l'actionneur est monté flottant entre les bras avant ;
- les bras ont une longueur comprise entre 240 et 600 mm ;
- la course du pare-chocs est ajustable par modification de la longueur des bras, notamment par découpe des bras ;
- le dispositif comprend un moyen de verrouillage du pare-chocs contre la traverse en position repliée;
- ledit moyen de verrouillage est solidaire de la traverse et comprend au moins une lame élastique présentant un bossage coopérant avec un trou du pare-chocs.

### BREVE DESCRIPTION DES DESSINS

L'invention sera mieux comprise à la lecture de la description détaillée qui va suivre, du dispositif anti-encastrement, et en référence aux figures annexées, données à titre illustratif et non limitatif, sur lesquelles :
- la figure 1 illustre un châssis porteur routier équipé d'un dispositif anti-encastrement déployé, en position de roulage ;
- la figure 2 illustre le même châssis routier en cours de déchargement, le dispositif anti-encastrement étant replié ;
- la figure 3 est une vue en perspective d'un dispositif anti-encastrement conforme à l'invention ;
- les figures 4 et 5 sont d'autres vues en perspective de ce même dispositif ;
- la figure 6 est un détail de la figure 5 ;
- la figure 7 est une vue du dispositif en position déployée ;
- la figure 8 est une vue du dispositif en position repliée ;
- la figure 9 est un détail de la figure 7 ;
- la figure 10 est un détail de la figure 8 ;
- la figure 11 est une vue en coupe de la figure 8 ;
- les figures 12A et 12B représentent deux variantes de dimensionnement du dispositif.

### DESCRIPTION DETAILLEE DE L'INVENTION

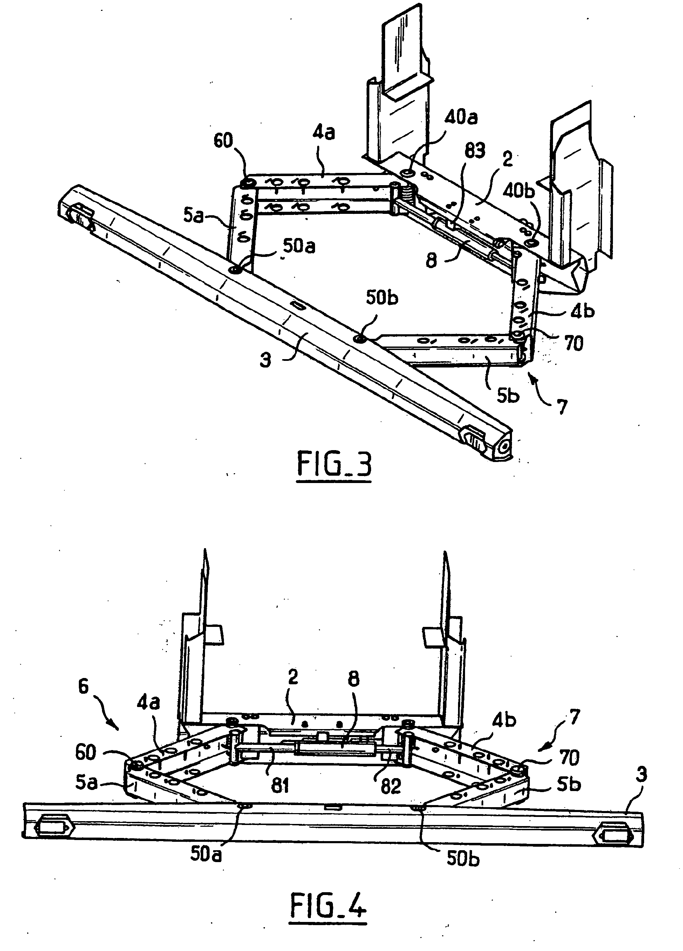

En référence à la figure 3, un dispositif anti-encastrement comprend tout d'abord une traverse 2, solidaire du châssis 1. La traverse 2 est typiquement une pièce allongée en tôle emboutie, que l'on fixe à l'arrière du châssis 1 par exemple au moyen de vis et d'écrous (non représentés).

Le dispositif comprend également un pare-chocs 3, qui est également une pièce allongée en tôle emboutie, dont la longueur est légèrement inférieure à celle du gabarit latéral du véhicule. A titre d'exemple, la longueur du pare-chocs 3 est de l'ordre de 2300 mm.

Le pare-chocs 3 est maintenu dans une position sensiblement parallèle à celle de la traverse aux moyens de deux paires de bras 6 et 7.

Les paires de bras 6 et 7 sont constituées chacune de deux bras et sont articulées en leur milieu de manière à être parallèles en position de roulage (dispositif anti-encastrement déployé) et à pouvoir être repliées lorsque l'on souhaite replier le dispositif pour les opérations de chargement ou de déchargement. Le déplacement des bras et du pare-chocs se fait dans un plan sensiblement horizontal.

On va décrire en détail la paire de bras 6, la paire de bras 7 étant symétrique par rapport à un plan vertical passant par le milieu du châssis 1.

La paire de bras 6 comprend un bras avant 4a et un bras arrière 5a. Les bras 4a et 5a sont des pièces allongées en tôle emboutie. Ils sont dimensionnés de manière à pouvoir supporter sans fléchir le poids du pare-chocs 3 qui, en position déployée, présente un porte-à-faux important. A titre d'exemple, ce porte-à-faux peut atteindre 1465 mm. De manière préférée, les bras 4a et 5a présentent une section générale en forme de U qui leur confère une meilleure rigidité.

Chaque bras 4a et 5a présente, à ses deux extrémités, des moyens d'articulation autour d'un axe vertical.

Selon un mode de réalisation préféré où les bras 4a et 5a ont une section en U, ils sont disposés de sorte que les branches du U soient horizontales et tournées vers l'intérieur. Dans ce cas, les moyens d'articulation peuvent être des trous disposés en vis-à-vis sur chacune des branches du U.

L'extrémité arrière du bras avant 4a et l'extrémité avant du bras arrière 5b sont liées au moyen d'un axe d'articulation vertical 60 qui traverse les trous prévus à cet effet. L'axe 60 est maintenu en place grâce à des anneaux élastiques ou circlips.

L'extrémité avant du bras avant 4a est reliée à la traverse 2 au moyen d'un axe vertical 40a. Comme exposé précédemment, le bras 4a et la traverse 2 présentent des trous permettant le passage de l'axe 40a et son maintien grâce à des circlips.

De manière similaire, l'extrémité arrière du bras arrière 5a est reliée au pare-chocs 3 par un axe vertical 50a.

La paire de bras 7 est symétrique à la paire de bras 6 qui vient d'être décrite ; il suffit de remplacer les références 4a, 5a, 40a, 40b, 60 respectivement par les références 4b, 5b, 40b, 50b et 70.

De manière préférée, les bras 4a, 5a, 4b et 5b sont de même longueur. On précise que dans ce texte, on entend par longueur d'un bras, la distance entre les axes de rotation situés à chaque extrémité de ce bras, c'est-à-dire par exemple pour le bras 4a, la distance entre le centre de l'axe 40a et le centre de l'axe 60. La distance entre les axes 40a et 40b sur la traverse 2 est alors égale à la distance entre les axes 50a et 50b sur le pare-chocs 3. Cette configuration permet, en position déployée, d'avoir des paires de bras 6 et 7 perpendiculaires au pare-chocs et à la traverse et par conséquent plus résistantes à la déformation en cas de choc.

Un actionneur 8 est monté flottant entre les deux bras avant 4a et 4b, parallèlement à la traverse 2. De préférence, l'actionneur 8 est un vérin hydraulique double effet à simple tige, l'extrémité de la tige 82 étant reliée au bras avant 4b au moyen d'un axe vertical maintenu par deux circlips. Du côté opposé à la tige, le corps du vérin est solidaire d'une rallonge 81, elle-même reliée au bras avant 4a au moyen d'un axe vertical maintenu par deux circlips. L'actionneur 8 pourrait également être monté entre les bras arrière 5a et 5b, parallèlement au pare-chocs 3, mais la liaison fluidique serait plus complexe à réaliser.

Sur le corps du vérin 8 est fixé un double clapet piloté 80 qui permet la double alimentation en fluide du vérin 8. L'actionneur peut être commandé depuis la cabine du véhicule, par des moyens connus de l'homme du métier qui ne seront pas décrits ici.

La sortie de la tige 82 permet de faire pivoter les bras avant 4a et 4b autour des axes 40a et 40b, ce qui écarte les bras avant 4a et 4b vers une position parallèle à la traverse 2, amorçant ainsi le repliement du dispositif anti-encastrement.

A l'inverse, le rappel de la tige 82 fait pivoter les bras avant 4a et 4b de manière à les ramener vers une position perpendiculaire à la traverse 2, ce qui permet le déploiement du dispositif anti-encastrement.

Conformément à l'invention, le repliement et le déploiement synchrone des bras avant et arrière est assuré par au moins quatre ressorts de torsion 9, disposés autour des axes de rotation des bras 4a, 4b ; 5a et 5b.

Les ressorts de torsion 9 sont identiques et présentent un couple élevé identique, le couple maximum étant de l'ordre de 74 Nm. De manière préférée, ces ressorts sont des ressorts hélicoïdaux dont le fil est en acier à ressort de 6 à 7 mm de diamètre, préférentiellement 6,5 mm, comprenant 6 à 10 spires jointives, de préférence 8 spires, et de diamètre extérieur compris entre 50 et 70 mm, de préférence 60 mm.

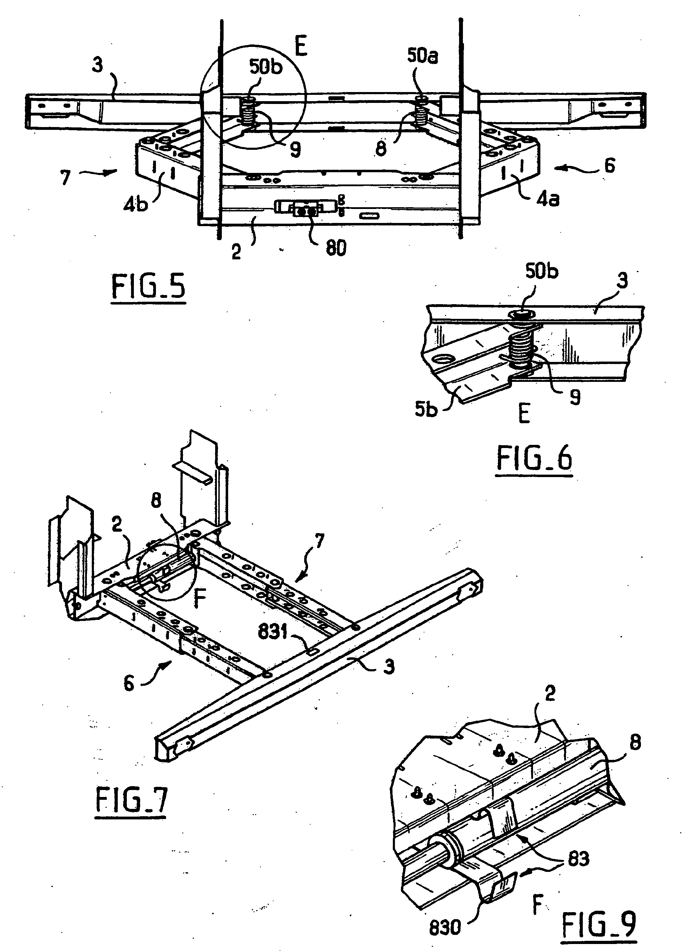

En référence aux figures 5 et 6, on décrit à titre d'exemple la disposition du ressort autour sur l'axe 50b, cette description étant aisément transposable aux autres axes. En position déployée, le ressort 9 est à l'état libre ou légèrement précontraint (c'est-à-dire jusqu'à 30 Nm environ), et ses extrémités de liaison sont disposées à angle droit, l'une des extrémités étant rendue solidaire du bras 5b, l'autre extrémité étant rendue solidaire de la traverse 2, de manière à ce que le ressort s'oppose au repliement du dispositif. A cet effet, des perçages sont prévus dans le bras 5b et dans la traverse 2 de manière à y insérer les extrémités de liaison du ressort 9.

Le fonctionnement du dispositif anti-encastrement est le suivant :
- Le dispositif étant déployé, l'actionnement du vérin 8 fait pivoter les bras avant 4a et 4b, tendant à les écarter et à les amener parallèles à la traverse 2. La résistance des ressorts 9 autour des axes 40a et 40b permet de maintenir identiques les angles de rotation des bras 4a et 4b. Sous l'effet de l'écartement des bras 4a et 4b, les bras 5a et 5b pivotent respectivement autour des axes 60 et 70, ce qui tend à rapprocher le pare-chocs 3 de la traverse 2. La présence des ressorts 9 autour des axes 50a et 50b permet de maintenir identiques les angles de rotation des bras 5a et 5b, ce qui garantit le maintien du pare-chocs 3 parallèle à la traverse et par conséquent son maintien à l'intérieur du gabarit du châssis pendant le repliement.
- Le dispositif étant replié, l'actionnement du vérin 8 fait pivoter les bras avant 4a et 4b de manière à les rendre parallèles, perpendiculairement à la traverse 2. L'effort identique transmis par les ressorts 9 disposés autour des axes 40a et 40b garantit le maintien d'un angle de rotation identique des bras avant. Sous l'effet du rapprochement des bras 4a et 4b, les bras 5a et 5b pivotent respectivement autour des axes 60 et 70, ce qui tend à éloigner le pare-chocs 3 de la traverse 2. La présence des ressorts 9 autour des axes 50a et 50b permet de maintenir identiques les angles de rotation des bras 5a et 5b, ce qui garantit le maintien du pare-chocs 3 parallèle à la traverse et par conséquent son maintien à l'intérieur du gabarit du châssis pendant le déploiement.

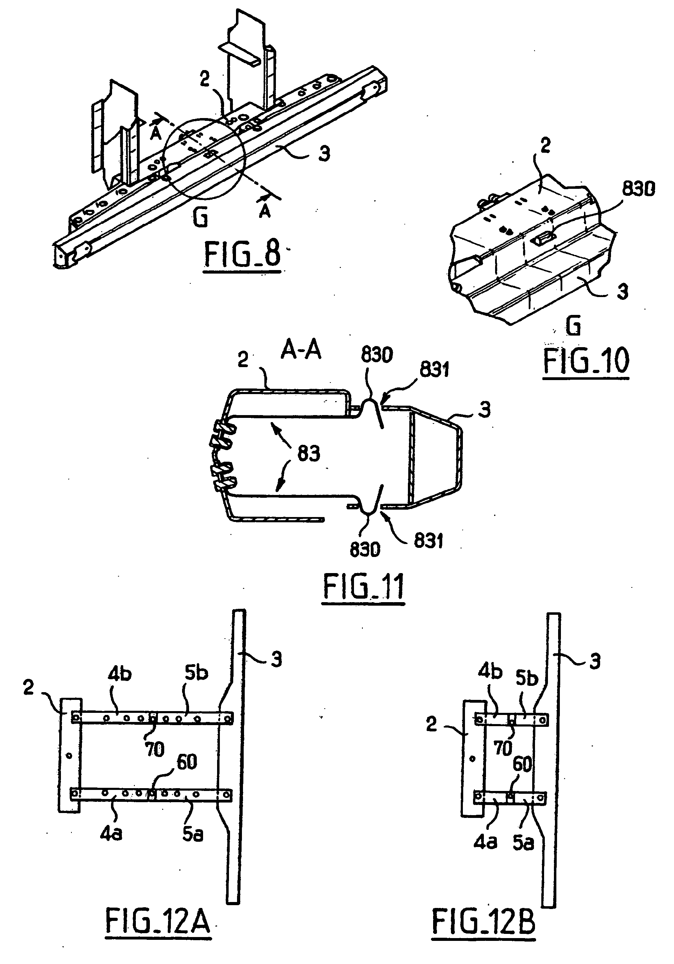

De manière particulièrement avantageuse, en référence aux figures 7 et 8, des moyens de verrouillage du dispositif en position repliée et en position déployée sont également prévus.

La figure 9 représente le détail F de la figure 7. Pour garantir le maintien du pare-chocs 3 en position repliée contre la traverse 2, un moyen de verrouillage 83 comprend au moins un ressort de verrouillage fixé sur la traverse 2 ; selon un mode préféré de réalisation, on utilise deux ressorts symétriques. Ces ressorts se présentent typiquement sous la forme de lames élastiques présentant des bossages 830 coopérant avec des trous 831 correspondants du pare-chocs 3.

La figure 10 représente le détail G de la figure 8. En fin de course de repliement, les bossages 830 entrent dans les trous 831 et verrouillent le pare-chocs 3 contre la traverse 2, comme on peut le voir également sur la figure 11, qui est une coupe transversale selon A-A du dispositif replié représenté à la figure 8. Le déverrouillage est assuré par l'actionneur 8, dont la force est très supérieure à celle des ressorts.

Le maintien du dispositif anti-encastrement en position déployée est quant à lui assuré par le double clapet piloté 80.

Par rapport à l'art antérieur, les ressorts de torsion 9 présentent un encombrement limité, puisqu'ils sont situés autour des axes de rotation des bras. Ils ne sont donc pas vulnérables vis-à-vis du coincement par rapport à des éléments extérieurs. Enfin, il s'agit de composants peu onéreux.

De par sa symétrie, le dispositif anti-encastrement est donc très simple à mettre au point et à fabriquer.

Les bras avant 4a et 4b étant symétriques, il est possible de ne fabriquer qu'un seul modèle de bras avant ; de même pour les bras arrière.

De plus, on minimise le nombre de composants à utiliser, puisque les quatre ressorts 9 sont identiques, et les axes 40a, 40b, 50a, 50b sont identiques. Le fabricant a donc un nombre minimal de références à gérer pour chaque composant.

Selon une caractéristique particulièrement avantageuse de l'invention, les bras sont en outre ajustables en longueur, de manière à permettre le réglage de la course du pare-chocs en fonction des différents porte-à-faux arrière.

A cet effet, on ne fabrique que des bras avant et arrière de longueur standard maximale, dans lesquels on perce à différents emplacements les trous pour les passages des axes, et on découpe, lors de l'assemblage pour un véhicule déterminé, les bras pour obtenir le porte-à-faux désiré.

Par exemple, on fabrique un bras avant 4a dont la distance maximale entre les perçages prévus pour le passage de l'axe 40a et de l'axe 60 est de 590 mm. On perce également trois autres trous, dont la distance avec le trou de passage de l'axe 40a est respectivement de 240 mm, 390 et 490 mm.

Le bras arrière 5a présente les mêmes perçages, référencés par rapport au trou pour le passage de l'axe 50a.

Selon la longueur choisie pour les bras 4a et 5a, on obtient les paramètres suivants :

| Longueur des bras (mm) | Longueur du dispositif déplié (mm) | Course du pare-chocs (mm) |
|---|---|---|
| 240 | 765 | 385 |
| 390 | 1065 | 685 |
| 490 | 1265 | 885 |
| 590 | 1465 | 1085 |

La figure 12A représente ainsi le dispositif avec les bras de la longueur maximale, tandis que la figure 12B illustre le dispositif avec les bras courts.

La description qui précède n'est bien sûr pas limitée aux exemples décrits, notamment pour ce qui concerne le mode d'assemblage des différents composants, ou encore leurs dimensions ou leur mode de fabrication.

## Revendications

1. Dispositif anti-encastrement rétractable destiné à être disposé notamment à l'arrière du châssis d'un véhicule, comprenant :
- une traverse (2) apte à être fixée au châssis,
- un pare-chocs (3), relié à la traverse (2) par quatre bras (4a, 4b, 5a, 5b) de même longueur,
deux bras avant (4a, 4b) étant montés pivotants autour d'un axe (40a, 40b) solidaire de la traverse (2),
deux bras arrière (5a, 5b) étant montés pivotants autour d'un axe (50a, 50b) solidaire du pare-chocs (3),
les bras avant (4a, respectivement 4b) et arrière (5a, respectivement 5b) étant agencés de manière à former deux paires (6, 7) articulées autour d'un axe (60, 70),
- au moins quatre ressorts de torsion (9) disposés autour des axes (40a, 40b, 50a, 50b) de rotation des bras (4a, 4b, 5a, 5b) de manière à maintenir, pour les quatre bras (4a, 4b, 5a, 5b), le même angle de rotation lors du déploiement et du repliement du dispositif anti-encastrement,
**caractérisé en ce qu'**il comprend en outre un actionneur (8) relié aux bras avant (4a, 4b) et adapté pour pivoter lesdits bras avant autour de leur axe (40a, 40b) vers la position déployée et vers la position repliée.

2. Dispositif selon la revendication 1, **caractérisé en ce que** les ressorts (9) sont à l'état libre ou légèrement précontraint lorsque le dispositif anti-encastrement est déployé et à l'état contraint lorsque le dispositif est replié.

3. Dispositif selon l'une des revendications 1 ou 2, **caractérisé en ce que** les ressorts (9) ont un diamètre de fil compris entre 6 et 7 mm, un nombre de spires jointives compris entre 6 et 10, et un diamètre extérieur compris entre 50 et 70 mm.

4. Dispositif selon l'une des revendications 1 à 3, **caractérisé en ce que** l'actionneur (8) est un vérin hydraulique double effet à simple tige.

5. Dispositif selon l'une des revendications 1 à 4, **caractérisé en ce que** l'actionneur (8) est monté flottant entre les bras avant (4a, 4b).

6. Dispositif selon l'une des revendications 1 à 5, **caractérisé en ce que** les bras (4a, 4b, 5a, 5b) ont une longueur comprise entre 240 et 600 mm.

7. Dispositif selon l'une des revendications 1 à 6, **caractérisé en ce que** la course du pare-chocs (3) est ajustable par modification de la longueur des bras (4a, 4b, 5a, 5b), notamment par découpe des bras.

8. Dispositif selon l'une des revendications 1 à 7, **caractérisé en ce qu'**il comprend un moyen (83) de verrouillage du pare-chocs (3) contre la traverse (2) en position repliée.

9. Dispositif selon la revendication 8, **caractérisé en ce que** le moyen (83) de verrouillage est solidaire de la traverse (2) et comprend au moins une lame élastique présentant un bossage (830) coopérant avec un trou (831) du pare-chocs (3).

## Claims

1. Retractable anti-underrun device intended to be arranged in particular at the rear of the chassis of a vehicle, comprising:
- a crossmember (2) able to be fixed to the chassis,
- a bumper (3), connected to the crossmember (2) by four arms (4a, 4b, 5a, 5b) of the same length,
two front arms (4a, 4b) mounted pivotingly around an axis (40a, 40b) integral with the crossmember (2),
two rear arms (5a, 5b) mounted pivotingly around an axis (50a, 50b) integral with the bumper (3),
the front arms (4a, respectively 4b) and rear arms (5a, respectively 5b) arranged in such a way as to form two pairs (6, 7) articulated around an axis (60, 70),
- at least four torsion springs (9) arranged around the axes (40a, 40b, 50a, 50b) of rotation of the arms (4a, 4b, 5a, 5b) in such a way as to maintain, for the four arms (4a, 4b, 5a, 5b), the same rotational angle during the deployment and folding of the anti-underrun device,
**characterised in that** it further comprises an actuator (8) connected to the front arms (4a, 4b) and adapted to pivot said front arms around their axis (40a, 40b) towards the deployed position and towards the folded position.

2. Device according to claim 1, **characterised in that** the springs (9) are at the free state or slightly pre-stressed when the anti-underrun device is deployed and at the stressed state when the device is folded.

3. Device according to one of claims 1 or 2, **characterised in that** the springs (9) have a wire diameter between 6 and 7 mm, a number of joined spires between 6 and 10, and an outside diameter between 50 and 70 mm.

4. Device according to one of claims 1 to 3, **characterised in that** the actuator (8) is a single rod type double-acting hydraulic cylinder.

5. Device according to one of claims 1 to 4, **characterised in that** the actuator (8) is mounted floatingly between the front arms (4a, 4b).

6. Device according to one of claims 1 to 5, **characterised in that** the arms (4a, 4b, 5a, 5b) have a length between 240 and 600 mm.

7. Device according to one of claims 1 to 6, **characterised in that** the course of the bumper (3) can be adjusted by modification of the length of the arms (4a, 4b, 5a, 5b), in particular by cutting the arms.

8. Device according to one of claims 1 to 7, **characterised in that** it comprises a means (83) of locking the bumper (3) against the crossmember (2) in folded position.

9. Device according to claim 8, **characterised in that** the means (83) of locking is integral with the crossmember (2) and comprises at least one spring plate having a boss (830) cooperating with a hole (831) of the bumper (3).

## Patentansprüche

1. Einziehbare Unterfahrschutzvorrichtung, die vorgesehen ist, insbesondere an dem Heck eines Fahrgestells eines Fahrzeugs angeordnet zu werden, aufweisend:
- einen Querträger (2), der angepasst ist, an dem Fahrgestell befestigt zu werden,
- einen Stoßfänger (3), der mit dem Querträger (2) über vier Arme (4a, 4b, 5a, 5b) gleicher Länge verbunden ist,
wobei zwei vordere Arme (4a, 4b) schwenkbar um eine jeweilige Achse (40a, 40b), die fest mit dem Querträger (2) verbunden ist, befestigt sind,
wobei zwei hintere Arme (5a, 5b) schwenkbar um eine jeweilige Achse (50a, 50b), die fest mit dem Stoßfänger (3) verbunden ist, befestigt sind,
wobei die vorderen Arme (4a bzw. 4b) und hinteren Arme (5a bzw. 5b) derart gelenkig über eine jeweilige Achse (60, 70) verbunden sind, dass sie zwei Paare (6, 7) ausbilden,
- zumindest vier Drehfedern (9), die um die Achsen (40a, 40b, 50a, 50b) zur Drehung der Arme (4a, 4b, 5a, 5b) derart angeordnet sind, dass der gleiche Drehwinkel bei Ausfahren und Einfahren der Unterfahrschutzvorrichtung für die vier Arme (4a, 4b, 5a, 5b) aufrechterhalten wird,
**dadurch gekennzeichnet, dass** die Vorrichtung darüber hinaus ein Stellglied (8) aufweist, das mit den vorderen Armen (4a, 4b) verbunden und angepasst ist, die vorderen Arme um ihre jeweiligen Achsen (40a, 40b) in Richtung Ausfahrposition oder in Richtung Einfahrposition zu verschwenken.

2. Vorrichtung gemäß Anspruch 1, **dadurch gekennzeichnet, dass** die Federn (9) in einem unbelastetem oder einem leicht vorgespannten Zustand sind, wenn die Unterfahrschutzvorrichtung ausgefahren ist, und in einem Spannungszustand sind, wenn die Vorrichtung eingefahren ist.

3. Vorrichtung gemäß einem der Ansprüche 1 oder 2, **dadurch gekennzeichnet, dass** die Federn (9) einen Drahtdurchmesser, der zwischen 6 und 7 mm liegt, eine Anzahl aneinandergrenzender Windungen, die zwischen 6 und 10 liegt, und einen Außendurchmesser, der zwischen 50 und 70 mm liegt, haben.

4. Vorrichtung gemäß einem der Ansprüche 1 bis 3, **dadurch gekennzeichnet, dass** das Stellglied (8) ein doppeltwirkender Hydraulikzylinder mit einzelnem Schaft ist.

5. Vorrichtung gemäß einem der Ansprüche 1 bis 4, **dadurch gekennzeichnet, dass** das Stellglied (8) schwimmend zwischen den vorderen Armen (4a, 4b) montiert ist.

6. Vorrichtung gemäß einem der Ansprüche 1 bis 5, **dadurch gekennzeichnet, dass** die Arme (4a, 4b, 5a, 5b) eine Länge haben, die zwischen 240 und 600 mm liegt.

7. Vorrichtung gemäß einem der Ansprüche 1 bis 6, **dadurch gekennzeichnet, dass** der Bewegungsverlauf des Stoßfängers (5) durch Änderung der Länge der Arme (4a, 4b, 5a, 5b), insbesondere durch Zuschnitt der Arme, einstellbar ist.

8. Vorrichtung gemäß einem der Ansprüche 1 bis 7, **dadurch gekennzeichnet, dass** sie ein Mittel (83) zur Verriegelung des Stoßfängers (3) gegen den Querträger (2) in der Einfahrposition aufweist.

9. Vorrichtung gemäß Anspruch 8, **dadurch gekennzeichnet, dass** das Mittel (83) zur Verriegelung fest mit dem Querträger (2) verbunden ist und zumindest ein elastisches Blattelement aufweist, das einen Dorn (830) bildet, der mit einer Öffnung (831) des Stoßfängers (3) zusammenwirkt.
